# EUROPEAN PATENT SPECIFICATION

(11) **EP 3 129 428 B1**
(45) Date of publication and mention of the grant of the patent: **06.05.2020**
(21) Application number: 15716038.3
(22) Date of filing: 10.04.2015
(51) Int. Cl.: C08J 5/04, B32B 5/28, C08J 5/24, C08K 3/04, C08L 63/00, B32B 5/02, B32B 5/26, B32B 7/12, B32B 27/08, B32B 27/20, B32B 27/26, B32B 27/28, B32B 27/38

(54) **COMPOSITE MATERIALS**
VERBUNDWERKSTOFFE
MATÉRIAUX COMPOSITES

(30) Priority: 10.04.2014 US 201414249380; 09.04.2015 WO PCT/US2015/025036
(43) Date of publication of application: 15.02.2017
(73) Proprietor: Hexcel Composites Limited, Duxford, Cambridgeshire CB22 4QB (GB); Hexcel Corporation, Dublin, CA 94568 (US)
(72) Inventor: BOYLE, Maureen, Dublin, CA 94568 (US); SIMMONS, Martin, Duxford CA CB22 4QD (GB); BLAIR, Dana, Duxford Cambridgeshire CB22 4QD (GB); TILBROOK, Dave, Duxford Cambs CB22 4QD (GB)
(74) Representative: Eddowes, Simon
(86) International application number: PCT/EP2015/057916
(87) International publication number: WO 2015/155362

(56) References cited:
- WO-A1-2008/127556
- WO-A1-2008/130484
- WO-A1-2013/186389
- US-A1- 2011 147 670
- US-A1- 2014 058 013

## Description

The present invention relates generally to pre-impregnated composite material (prepreg) that is used in making high performance composite parts. More particularly, the invention is directed to providing prepreg that may be cured/molded to form composite parts having good mechanical properties such as high compression strength, as well as, high damage tolerance and interlaminar fracture toughness.

Composite materials are typically composed of a resin matrix and reinforcing fibers as the two primary constituents. Composite materials are often required to perform in demanding environments, such as in the field of aerospace where the physical limits and characteristics of the composite part is of critical importance.

Pre-impregnated composite material (prepreg) is used widely in the manufacture of composite parts. Prepreg is a combination that typically includes uncured resin and fiber reinforcement, which is in a form that is ready for molding and curing into the final composite part. By pre-impregnating the fiber reinforcement with resin, the manufacturer can carefully control the amount and location of resin that is impregnated into the fiber network and ensure that the resin is distributed in the network as desired. It is well known that the relative amount of fibers and resin in a composite part and the distribution of resin within the fiber network affect the structural properties of the part. Prepreg is a preferred material for use in manufacturing load-bearing or primary structural parts and particularly aerospace primary structural parts, such as wings, fuselages, bulkheads and control surfaces. It is important that these parts have sufficient strength, damage tolerance and other requirements that are routinely established for such parts.

The fiber reinforcements that are commonly used in aerospace prepreg are multidirectional woven fabrics or unidirectional tape that contains fibers extending parallel to each other. The fibers are typically in the form of a bundle of numerous individual fibers or filaments that is referred to as a "tow". The fibers or tows can also be chopped and randomly oriented in the resin to form a non-woven mat. These various fiber reinforcement configurations are combined with a carefully controlled amount of uncured resin. The resulting prepreg is typically placed between protective layers and rolled up for storage or transport to the manufacturing facility.

Prepreg may also be in the form of short segments of chopped unidirectional tape that are randomly oriented to form a non-woven mat of chopped unidirectional tape. This type of pre-preg is referred to as a "quasi-isotropic chopped" prepreg. Quasi-isotropic chopped prepreg is similar to the more traditional non-woven fiber mat prepreg, except that short lengths of chopped unidirectional tape (chips) are randomly oriented in the mat rather than chopped fibers.

The compression strength of a cured composite material is largely dictated by the individual properties of the reinforcing fiber and matrix resin, as well as the interaction between these two components. In addition, the fiber-resin volume ratio is an important factor. The compression strength of a composite part is typically measured at room temperature under dry conditions. However, the compression strength is also routinely measured at elevated temperature (180° F.) under wet conditions. Many parts exhibit a significant drop in compression strength under such hot and wet conditions.

In many aerospace applications, it is desirable that the composite part exhibit high compression strength under both room temperature/dry conditions and hot/wet conditions. However, attempts to keep compression strength constant under hotter/wetter conditions often result in negative effects on other desirable properties, such as damage tolerance and interlaminar fracture toughness.

Selecting higher modulus resins can be an effective way to increase the compression strength of a composite. However, this can result in a tendency to reduce damage tolerance, which is typically measured by a decrease in compressive properties, such as compression after impact (CAI) strength. Accordingly, it is very difficult to achieve a simultaneous increase in both the compression strength and damage tolerance including fracture toughness.

Multiple layers of prepreg are commonly used to form composite parts that have a laminated structure. Delamination of such composite parts is an important failure mode. Delamination occurs when two layers debond from each other. Important design limiting factors include both the energy needed to initiate a delamination and the energy needed to propagate it. The initiation and growth of a delamination is often determined by examining Mode I and Mode II fracture toughness. Fracture toughness is usually measured using composite materials that have a unidirectional fiber orientation. The interlaminar fracture toughness of a composite material is quantified using the G1c (Double Cantilever Beam) and/or G2c (End Notch Flex) tests. In Mode I, the pre-cracked laminate failure is governed by peel forces and in Mode II the crack is propagated by shear forces.

A simple way to increase interlaminar fracture toughness has been to increase the ductility of the matrix resin by introducing thermoplastic sheets as interleaves between layers of prepreg. However, this approach tends to yield stiff, tack-free materials that are difficult to use. Another approach has been to include a toughened resin interlayer of about 20 to 50 microns thickness between fiber layers. The toughened resin includes thermoplastic particles. Polyamides have been used as such thermoplastic particles.

Although existing prepregs are well suited for their intended use in providing composite parts that are strong and damage tolerant, there still is a continuing need to provide prepreg that may be used to make composite parts that have even higher levels of compression strength under hot and wet conditions, high damage tolerance (CAI) and high interlaminar fracture toughness (G1c and/or G2c).

WO2013/186389 discloses a prepreg comprising a fibre reinforced curable resin, the prepreg containing electrically conductive particles in the range of from 0.5 to 10% by weight based on the resin, the electrically conductive particles comprising potato shaped graphite.

US2014/058013 discloses pre-impregnated composite materials that can be cured/molded to form composite parts having high compression strength under hot and wet conditions, as well as, high damage tolerance and interlaminar fracture toughness. The matrix resin includes a thermoplastic particle component that includes polyamide particles which are composed of the polymeric condensation product of a methyl derivative of bis(4-aminocyclohexyl)methane and an aliphatic dicarboxylic acid.

According to the invention there is provided a prepreg, a composite material, a method and a resin matrix as defined in any one of the accompanying claims.

The present invention provides a prepreg comprising: a fiber reinforcement; and a curable resin comprising:
25 to 35 weight percent tetrafunctional epoxy resin based on the total weight of the curable resin;
18 to 28 weight percent difunctional epoxy resin based on the total weight of the curable resin;
4 to 18 weight percent polyether sulfone based on the total weight of the curable resin;
2 to 10 weight percent polyamide 12 particles based on the total weight of the curable resin;
2 to 10 weight percent polyamide 11 particles based on the total weight of the curable resin:
   1 to 8 weight percent potato shaped graphite particles based on the total weight of the curable resin; and
   17.4 to 27.4 weight percent of a curing agent for said curable resin based on the total weight of the curable resin.

The present invention further provides a composite material comprising a prepreg according to the present invention wherein said curable resin has been cured to provide a cured prepreg.

The present invention further provides a method for making a prepreg comprising the steps of: providing a fiber reinforcement; and
applying a curable resin to said fiber reinforcement, said curable resin comprising:
25 to 35 weight percent tetrafunctional epoxy resin based on the total weight of the curable resin;
18 to 28 weight percent difunctional epoxy resin based on the total weight of the curable resin;
4 to 18 weight percent polyether sulfone based on the total weight of the curable resin;
2 to 10 weight percent polyamide 12 particles based on the total weight of the curable resin;
2 to 10 weight percent polyamide 11 particles based on the total weight of the curable resin;
1 to 8 weight percent potato shaped graphite particles based on the total weight of the curable resin; and
17.4 to 27.4 weight percent of a curing agent for said curable resin based on the total weight of the curable resin.

The present invention further provides a resin matrix comprising
25 to 35 weight percent tetrafunctional epoxy resin based on the total weight of the curable resin;
18 to 28 weight percent difunctional epoxy resin based on the total weight of the curable resin;
4 to 18 weight percent polyether sulfone based on the total weight of the curable resin;
2 to 10 weight percent polyamide 12 particles based on the total weight of the curable resin;
2 to 10 weight percent polyamide 11 particles based on the total weight of the curable resin:
1 to 8 weight percent potato shaped graphite particles based on the total weight of the curable resin; and
17.4 to 27.4 weight percent of a curing agent for said curable resin based on the total weight of the curable resin.

In accordance with the present invention, pre-impregnated composite material (prepreg) is provided that can be molded to form composite parts that have high levels of strength, damage tolerance and interlaminar fracture toughness. This is achieved without causing any substantial negative impact upon the physical or chemical characteristics of the uncured prepreg or the cured composite part.

The pre-impregnated composite materials of the present invention are composed of reinforcing fibers and a matrix. The matrix includes a resin component made up of one or more difunctional epoxy resins and multifunctional epoxy resins. The matrix further includes a thermoplastic particle component, a thermoplastic toughening agent and a curing agent. As a feature of the present invention, the thermoplastic particle component is composed of thermoplastic particles made from polyamide 12 (Nylon 12 or PA12) and thermoplastic particles made from polyamide 11 (Nylon 11 or PA 11) in combination with potato shaped graphite.

It has been found that the use of a matrix resin that contains a mixture of polyamide 12 thermoplastic particles and polyamide 11 thermoplastic particles in combination with potato shaped graphite, as set forth above, results in the formation of prepreg that may be molded to form composite parts that have improved mechanical performance, notably tensile strength and G1c. Also we have found high levels of strength, damage tolerance and interlaminar fracture toughness in comparison to conventional systems.

A preferred exemplary resin is composed of: 28 to 32 wt % tetrafunctional epoxy resin; 16 to 20 wt % bisphenol A epoxy resin: 3.6 to 7.6 wt % bisphenol F epoxy resin: 7 to 11 wt % PES; 4 to 8 wt % PA12 particles: 4 to 8 wt % PA11 particles; 2 to 8 wt % PSG particles; and 20.4 to 24.4 wt % 4,4' DDS as the curing agent.

A preferred exemplary resin is composed of: 25 to 35 wt % tetrafunctional epoxy resin preferably from 10 to 32% by weight of the resin, more preferably from 14 to 26% by weight of the resin and/or combinations of the aforesaid ranges; 18 to 28 wt % difunctional epoxy resin preferably from 22 to 26% by weight of the resin, more preferably from 23 to 26% by weight of the resin and/or combinations of the aforesaid ranges; 4 to 18 wt % polyethersulfone (PES), preferably from 5 to 17% by weight of the PES resin, more preferably from 6 to 13% by weight of the resin and/or combinations of the aforesaid ranges; 2 to 10 wt % polyamide 12 (PA12) particles, preferably from 3 to 9 wt% based on the resin or from 4 to 8 wt% based on the resin and/or combinations of the aforesaid ranges; 2 to 10 wt % polyamide 11 (PA11) particles preferably from 3 to 9 wt% based on the resin or from 4 to 8 wt% based on the resin and/or combinations of the aforesaid ranges; 1 to 8 wt % potato-shaped graphite (PSG) particles, preferably from 2 to 7 weight% or from 3 to 6 weight% and/or combinations of the aforesaid ranges; and 17 to 28 wt % curing agent, preferably from 18 to 27wt% of curing agent based on the weight of the resin and/or combinations of the aforesaid ranges.

An example of a preferred resin formulation is: 30.0 wt % tetrafunctional epoxy resin; 17.9 wt % bisphenol A epoxy resin; 5.7 wt % bisphenol F epoxy resin; 9.0 wt % PES; 6.0 wt % PA12 particles; 6.0 wt % PA12 particles; 3.0 wt % PSG particles; and 22.4 wt % 4,4' DDS. For this exemplary formulation: MY0721 is a preferred tetrafunctional epoxy resin; Epon 825 (DER 332-Dow Chemical. Midland, Mich.) is a preferred bisphenol A epoxy; GY281 (Huntsman Advanced Materials-Brewster, N.Y.) is a preferred bisphenol F epoxy resin; 5003P (Sumitomo Chemicals) is a preferred PES; SP10L particles (KOBO Products-South Plainfield, N.J.) are preferred PA12 particles; and Rilsan PA11 particles (Arkema, France) are preferred PA11 particles.

In another embodiment, polyamide particle sizes of from 5-30 microns are preferred for these formulations. Polyamide particle sizes of from 10-20 microns are even more preferred.

The above described and many other features and attendant advantages of the present invention will become better understood by reference to the following detailed description.

The pre-impregnated composite materials (prepreg) of the present invention may be used as a replacement for existing prepreg that is being used to form composite parts in the aerospace industry and in any other application where high structural strength and damage tolerance is required. The invention involves substituting the resin formulations of the present invention in place of existing resins that are being used to make prepreg. Accordingly, the resin formulations of the present invention are suitable for use in any of the conventional prepreg manufacturing and curing processes.

The pre-impregnated composite materials of the present invention are composed of reinforcing fibers and an uncured resin matrix. The reinforcing fibers can be any of the conventional fiber configurations that are used in the prepreg industry. The matrix resin includes a resin component that is made up of difunctional epoxy resins and multifunctional aromatic epoxy resins with a functionality greater than two. The matrix resin further includes a thermoplastic particle component, a thermoplastic toughening agent and a curing agent. A feature of the present invention is that the thermoplastic particle component is composed of a mixture of polyamide 12 particles and polyamide 11 particles.

It was discovered that thermoplastic toughened epoxy resins that include a mixture of PA12 particles and PA11 particles when combined with potato shaped graphite particles (PSG) in the resin matrix provide cured laminates that have high interlaminar fracture toughness. In a preferred embodiment the combined content of PA11 and PA12 is in the range of from 8 to 13 weight% based on the total weight of the resin, preferably from 9 to 12.5 weight% based on the total weight of the resin and/or combinations of the aforesaid ranges.

In another embodiment, the combined content of PA11, PA12 and PSG is in the range of from 12 to 18 weight% based on the total weight of the resin, preferably from 13 to 16 weight% and more preferably from 14 to 16 weight % based on the total weight of the resin and/or combinations of the aforesaid ranges.

The difunctional epoxy resins that are used to form the resin component of the matrix may be any suitable difunctional epoxy resin. It will be understood that this includes any suitable epoxy resins having two epoxy functional groups. The difunctional epoxy resin may be saturated, unsaturated, cycloaliphatic, alicyclic or heterocyclic. The difunctional epoxy may be used alone or in combination with multifunctional epoxy resins to form the resin component. Resin components that contain only multifunctional epoxy are also possible.

Difunctional epoxy resins, by way of example, include those based on: diglycidyl ether of Bisphenol F, Bisphenol A (optionally brominated), glycidyl ethers of phenol-aldelyde adducts, glycidyl ethers of aliphatic diols, diglycidyl ether, diethylene glycol diglycidyl ether, Epikote, Epon, aromatic epoxy resins, epoxidised olefins, brominated resins, aromatic glycidyl amines, heterocyclic glycidyl imidines and amides, glycidyl ethers, fluorinated epoxy resins, or any combination thereof. The difunctional epoxy resin is preferably selected from diglycidyl ether of Bisphenol F, diglycidyl ether of Bisphenol A, diglycidyl dihydroxy naphthalene, or any combination thereof. Most preferred is diglycidyl ether of Bisphenol F. Diglycidyl ether of Bisphenol F is available commercially from Huntsman Advanced Materials (Brewster, N.Y.) under the trade names Araldite GY281 and GY285 and from Ciba-Geigy (location) under the trade name LY9703. A difunctional epoxy resin may be used alone or in any suitable combination with other difunctional epoxies or multifunctional epoxies to form the resin component.

The resin component may include one or more epoxy resins with a functionality that is greater than two. Preferred multifunctional epoxy resins are those that are trifunctional or tetrafunctional. The multifunctional epoxy resin may be a combination of trifunctional and multifunctional epoxies. The multifunctional epoxy resins may be saturated, unsaturated, cycloaliphatic, alicyclic or heterocyclic.

Suitable multifunctional epoxy resins, by way of example, include those based upon: phenol and cresol epoxy novolacs, glycidyl ethers of phenol-aldelyde adducts; glycidyl ethers of dialiphatic diols; diglycidyl ether; diethylene glycol diglycidyl ether; aromatic epoxy resins; dialiphatic triglycidyl ethers, aliphatic polyglycidyl ethers; epoxidised olefins; brominated resins; aromatic glycidyl amines; heterocyclic glycidyl imidines and amides; glycidyl ethers; fluorinated epoxy resins or any combination thereof.

A trifunctional epoxy resin will be understood as having the three epoxy groups substituted either directly or indirectly in a para or meta orientation on the phenyl ring in the backbone of the compound. A tetrafunctional epoxy resin will be understood as having the four epoxy groups substituted either directly or indirectly in a meta or para orientation on the phenyl ring in the backbone of the compound.

The phenyl ring may additionally be substituted with other suitable non-epoxy substituent groups. Suitable substituent groups, by way of example, include hydrogen, hydroxyl, alkyl, alkenyl, alkynyl, alkoxyl, aryl, aryloxyl, aralkyloxyl, aralkyl, halo, nitro, or cyano radicals. Suitable non-epoxy substituent groups may be bonded to the phenyl ring at the para or ortho positions, or bonded at a meta position not occupied by an epoxy group. Suitable tetrafunctional epoxy resins include N,N,N',N'-tetraglycidyl-m-xylenediamine (available commercially from Mitsubishi Gas Chemical Company (Chiyoda-Ku, Tokyo, Japan) under the name Tetrad-X), and Erisys GA-240 (from CVC Chemicals, Morrestown, N.J.). Suitable trifunctional epoxy resins, by way of example, include those based upon: phenol and cresol epoxy novolacs; glycidyl ethers of phenol-aldelyde adducts; aromatic epoxy resins; dialiphatic triglycidyl ethers; aliphatic polyglycidyl ethers; epoxidised olefins; brominated resins, aromatic glycidyl amines and glycidyl ethers; heterocyclic glycidyl imidines and amides; glycidyl ethers; fluorinated epoxy resins or any combination thereof.

An exemplary trifunctional epoxy resin is triglycidyl meta-aminophenol. Triglycidyl meta-aminophenol is available commercially from Huntsman Advanced Materials (Monthey, Switzerland) under the trade name Araldite MY0600 and from Sumitomo Chemical Co. (Osaka, Japan) under the trade name ELM-120. Another exemplary trifunctional epoxy resin is triglycidyl para-aminophenol. Triglycidyl para-aminophenol is available commercially from Huntsman Advanced Materials (Monthey, Switzerland) under the trade name Araldite MY0510.

Additional examples of suitable multifunctional epoxy resin include, by way of example, N,N,N',N'-tetraglycidyl-4,4'-diaminodiphenyl methane (TGDDM available commercially as Araldite MY720 and MY721 from Huntsman Advanced Materials (Monthey. Switzerland), or ELM 434 from Sumitomo), triglycidyl ether of para aminophenol (available commercially as Araldite MY 0500 or MY 0510 from Huntsman Advanced Materials), dicyclopentadiene based epoxy resins such as Tactix 556 (available commercially from Huntsman Advanced Materials), tris-(hydroxyl phenyl), and methane-based epoxy resin such as Tactix 742 (available commercially from Huntsman Advanced Materials). Other suitable multifunctional epoxy resins include DEN 438 (from Dow Chemicals, Midland, Mich.), DEN 439 (from Dow Chemicals), Araldite ECN 1273 (from Huntsman Advanced Materials), and Araldite ECN 1299 (from Huntsman Advanced Materials).

Polyamide 12 particles are available commercially from a number of sources. The preferred polyamide 12 particles are available from Kobo Products under the trade name SP10L. SP10L particles contain over 98 wt % PA 12. The particle size distribution is from 7 microns to 13 microns with the average particle size being 10 microns. The density of the particles is 1 g/cm³. It is preferred that the PA 12 particles are at least 95 wt % PA12, excluding moisture content.

Polyamide 11 particles are also available commercially from a number of sources. The preferred polyamide 11 particles are available from Arkema under the trade name Rislan PA11. These particles contain over 98 wt % PA 11 and have a particle size distribution of 15 microns to 25 microns. The average particle size is 20 microns. The density of the Rislan PA11 particles is 1 g/cm³. It is preferred that the PA 11 particles are at least 95 wt % PA11, excluding moisture content

Preferably, both the PA12 and PA 11 polyamide particles should have particle sizes of below 100 microns. It is preferred that the particles range in size from 5 to 60 microns and more preferably from 5 to 30 microns. It is preferred that the average particle size is from 5 to 20 microns. The particles may be regular or irregular in shape. For example, the particles may be substantially spherical or they can be particles with a jagged shape. It is preferred that the PA 11 particles have an average particle size that is larger than the PA12 particles. Preferably, the average PA12 particles size will range from 5 to 15 microns and the average PA11 particle size will range from 15 to 25 microns.

The thermoplastic particle component is present in the range 4 wt % to 20 wt %, based on the total weight of the matrix. Preferably, there will be from 5 to 15 wt % thermoplastic particles. Most preferably, the matrix will contain from 9 to 13 wt % thermoplastic particles. The relative amounts of PA12 and PA 11 particles may be varied. The weight amount of PA12 particles is preferably equal to or greater than the weight amount of PA 11 particles. It is preferred that the weight amount of PA 12 particles be greater than the weight amount of PA 11 particles. Preferred weight ratios of PA12 particles to PA11 particles range from 1.1:1.0 to 1.5:1.0.

The term "potato graphite" will be used herein to describe graphite processed to increase the porosity or spherocity of the graphite. The process may be practiced on natural (e.g., vein graphite) or artificial graphite (e.g., highly crystalline synthetic graphite). Prior to processing, the graphite is commonly scaly (e.g., plate like) or flake graphite having a relatively high degree of crystallinity. The graphite is processed by milling, rolling, grinding, compressing, deforming, etc. the graphite to bend, fold, shape, form, etc. the flakes into a roughly spherical shape. This process may increase the isotropic properties of the graphite over the more anisotropic flake form of the graphite. The potato shaped graphite particles may be coated or uncoated. They may be coated by vapour deposition which typically deposits a highly conductive layer of carbon. The PSG particle can exhibit a planar crystalline structure, whereas the CVD carbon layer is deposited on top of this as an amorphous carbon coating. The Carbon coating can lower the specific resistivity of the PSG. The PSG particles may also be coated by other coating processes known to the art, for example metallisation or sputtering. They may be coated by carbon in any of its forms, or with metals or polymers. The term 'potato shaped graphite' is common to the art as can be seen in the following examples: High-Purity Graphite Powders for High Performance, by Giovanni Juri, Henri-Albert Wilhelm and Jean L'Heureux, Timhncal Ltd. Switzerland, 2007 and Graphite: High-tech Supply Sharpens Up, Penny Crossley, industrial Minerals, 2000.

The term "potato shaped graphite" is also used herein to describe graphite having a shape that is typically produced by the process described above (whether produced by such process, by another process or processes, naturally occurring, etc.). "Potato shaped graphite" commonly ranges in shape from the shape of a potato to almost spherical. "Potato shaped graphite" is typically elongated, oblong, etc. and may include graphite having an ellipsoid shape, an ovoid shape, a rectangular shape, an oblate spheroid shape, etc. Both "potato graphite" overall and individual particles of "potato graphite" do not necessarily have a uniform shape and do not necessarily have a symmetrical shape. As used herein, the term "potato shaped graphite" is intended to encompass graphite produced by the process described above, and graphite having the shapes as explained in this paragraph.

Typically PSG have at least one of the following two characteristics: a tap density between 0.3 and 1.5, preferably between 0.5 and 1.4, most preferably between 1 and 1.3 g/cc, when measured according to the method associated with the instrument sold under the name of Logan Instrument Corp. Model Tap-2. They also have a granulometric dispersion measured according to the method associated with the particle analyser sold under the name Microtac Model X100 Particle Analyzer, such that the D90/D10 distribution ratio varies between 2 and 5, and the particles have a size between 1 µm and 50 µm, preferably such that the D90/D10 distribution ratio varies between 2.2 and 4.2 and the particles have a size between 2 µm and 30 µm and or combinations of the aforesaid ranges.

We have found that coated PSG particles as supplied Nippon Power Graphite Company of Japan, having an average particle size of 10 to 20 microns, preferably of 15 microns are particularly suitable for increasing the electrical conductivity of the prepreg. Coated PSG typically has a harder surface than uncoated PSG and a lower specific resistivity, the resistivity can be at least 50% lower than the uncoated PSG. In addition PSG particles from NGS Naturgraphit of Germany are suitable for use in this invention. Other suppliers of spheroidal or near spherical graphite with the properties similar to those described above are also suitable for use in this invention.

Potato shaped graphite (PSG) particles are described in United States Patent Publication 2010/0092808, and have at least one of the following characteristics: a tab density between 0.3 and 1.5 g/cc, a potato like shape, and a granulometric dispersion such that the D90/D10 ratio varies between 2 and 5, and the particles have a size between 1 and 50 µm as measured using a Microtac Model X100 particle analyser. In an embodiment in which disrupted fibres are also in the resin interlayer, the size and shape of the carbon particles is less important as both the fibres and the particles contribute to the increase in conductivity.

Additionally, we have found that by use of the disrupted fibres, smaller amounts of conductive particles are required to achieve a given electrical conductivity. Potato shaped graphite is a relatively soft material which allows the material to partly disintegrate during resin impregnation and additionally, due to their shape and softness the use of potato shaped graphite particles reduces the tendency of the resin composition to damage the surface of the rollers that are employed in the manufacturing of prepregs. PSG particles that are in a spherical or near spherical shape are preferred as this enables the conductivity to be increased for a minimal concentration of PSG in relation to the resin. It is preferred that the prepreg contain from 0.05 to 4.5 wt % potato shaped graphite, more preferably to 0.1 to 3.0 wt %, and most preferably between 0.25 wt % and 1.5 wt %

One suitable potato shaped graphite (PSG) is the product supplied by NGS Naturgraphit of Germany, called SG25/99.95 SC which has an average particle size of from 10 to 30 microns. Alternatively, PSG supplied by Nippon Power Graphite Company of Japan, called GHDR-15-4 and having an average particle size of from 10 to 30 microns may preferably be used. The GHDR-15-4 comprises a carbon coating deposited by carbon vapour deposition on to its outer surface. Spherical or spheroidal graphite available from other suppliers such as Timrex are also suitable.

The prepreg matrix resin includes at least one curing agent. Suitable curing agents are those which facilitate the curing of the epoxy-functional compounds of the invention and, particularly, facilitate the ring opening polymerization of such epoxy compounds. In a particularly preferred embodiment, such curing agents include those compounds which polymerize with the epoxy-functional compound or compounds, in the ring opening polymerization thereof. Two or more such curing agents may be used in combination.

Suitable curing agents include anhydrides, particularly polycarboxylic anhydrides, such as nadic anhydride (NA), methylnadic anhydride (MNA-available from Aldrich), phthalic anhydride, tetrahydrophthalic anhydride, hexahydrophthalic anhydride (HHPA-available from Anhydrides and Chemicals Inc., Newark, N.J.), methyltetrahydrophthalic anhydride (MTHPA-available from Anhydrides and Chemicals Inc.), methyllhexahydrophthalic anhydride (MHHPA-available from Anhydrides and Chemicals Inc.), endomethylenetetrahydrophthalic anhydride, hexachloroendomethylene-tetrahydrophthalic anhydride (Chlorentic Anhydride-available from Velsicol Chemical Corporation, Rosemont, III.), trimellitic anhydride, pyromellitic dianhydride, maleic anhydride (MA-available from Aldrich), succinic anhydride (SA), nonenylsuccinic anhydride, dodecenylsuccinic anhydride (DDSA-available from Anhydrides and Chemicals Inc.), polysebacic polyanhydride, and polyazelaic polyanhydride.

Further suitable curing agents are the amines, including aromatic amines. e.g., 1,3-diaminobenzene, 1,4-diaminobenzene, 4,4'-diamino-diphenyhnethane, and the polyaminosulphones, such as 4,4'-dianinodiphenyl sulphone (4,4'-DDS-available from Huntsman), 4-aminophenyl sulphone, and 3,3'-diaminodiphenyl sulphone (3.3'-DDS). Also, suitable curing agents may include polyols, such as ethylene glycol (EG-available from Aldrich), poly(propylene glycol), and poly(vinyl alcohol); and the phenol-formaldehyde resins, such as the phenol-formaldehyde resin having an average molecular weight of about 550-650, the p-t-butylphenol-formaldehyde resin having an average molecular weight of about 600-700, and the p-n-octylphenol-formaldehyde resin, having an average molecular weight of about 1200-1400, these being available as HRJ 2210, HRJ-2255, and SP-1068, respectively, from Schenectady Chemicals, Inc., Schenectady, N.Y.). Further as to phenol-formaldehyde resins, a combination of CTU guanamine, and phenol-formaldehyde resin having a molecular weight of 398, which is commercially available as CG-125 from Ajinomoto USA Inc. (Teaneck, N.J.), is also suitable.

Different commercially available compositions may be used as curing agents in the present invention. One such composition is AH-154, a dicyandiamide type formulation, available from Ajinomoto USA Inc. Others which are suitable include Ancamide 400, which is a mixture of polyamide, diethyltriamine, and triethylenetetraamine, Ancamide 506, which is a mixture of amidoamine, imidazoline, and tetraethylenepentaamine, and Ancamide 1284, which is a mixture of 4,4'-methylenedianiline and 1,3-benzenediamine; these formulations are available from Pacific Anchor Chemical, Performance Chemical Division, Air Products and Chemicals, Inc., Allentown, Pa.

Additional suitable curing agents include imidazole (1,3-diaza-2,4-cyclopentadiene) available from Sigma Aldrich (St. Louis, Mo.), 2-ethyl-4-methylimidazole available from Sigma Aldrich, and boron trifluoride amine complexes, such as Anchor 1170, available from Air Products & Chemicals. Inc.

Still additional suitable curing agents include 3,9-bis(3-aminopropyl-2,4,8,10-tetroxaspiro[5.5]undecane, which is commercially available as ATU, from Ajinomoto USA Inc., as well as aliphatic dihydrazide, which is commercially available as Ajicure UDH, also from Ajinomoto USA Inc., and mercapto-terminated polysulphide, which is commercially available as LP540, from Morton International, Inc., Chicago, III.

The curing agent(s) is selected so that it provides curing of the matrix at suitable temperatures. The amount of curing agent required to provide adequate curing of the matrix will vary depending upon a number of factors including the type of resin being cured, the desired curing temperature and curing time. Curing agents typically may also include cyanoguanidine, aromatic and aliphatic amines, acid anhydrides, Lewis Acids, substituted ureas, imidazoles and hydrazines. The particular amount of curing agent required for each particular situation may be determined by well-established routine experimentation.

Exemplary preferred curing agents include 4.4'-diaminodiphenyl sulphone (4,4'-DDS) and 3,3'-diaminodiphenyl sulphone (3,3'-DDS), both commercially available from Huntsman.

The curing agent is present in an amount that ranges from 17.4 wt % to 27.4 wt % the uncured matrix. Preferably, the curing agent is present in an amount that ranges from 15 wt % to 25 wt %. More preferably, the curing agent is present in the range 18 wt % to 24 wt % of the uncured matrix.

3,3'-DDS is a particularly preferred curing agent. It is preferably used as the sole curing agent in an amount ranging from 19 wt % to 23 wt %. Small amounts (less than 2 wt %) of other curatives, such as 4,4'-DDS, may be included, if desired.

The matrix of the present invention also includes apolyether sulfone thermoplastic toughening agent. Typically, the polyether sulfone is added to the resin mix as particles that are dissolved in the resin mixture by heating prior to addition of the curing agent. Once the polyether sulfone is substantially dissolved in the hot matrix resin precursor (i.e. the blend of epoxy resins), the precursor is cooled and the remaining ingredients (curing agent and insoluble thermoplastic particles) are added.

The polyether sulfone is present in the range 4 wt % to 18 wt %, based on the total weight of the uncured resin matrix. A suitable polyether sulfone, by way of example, is particulate polyethersulfone (PES) sold under the trade name Sumikaexcel 5003P, which is commercially available from Sumitomo Chemicals. Alternatives to 5003P are Solvay polyethersulphone 105RP, or the non-hydroxyl terminated grades such as Solvay 1054P. Densified PES particles may be used as the toughening agent. The form of the PES is not particularly important since the PES is dissolved during formation of the resin. Densified PES particles can be made in accordance with the teachings of U.S. Pat. No. 4,945,154. Densified PES particles are also available commercially from Hexcel Corporation (Dublin, Calif.) under the trade name HRI-1. The average particle size of the toughening agent should be less than 100 microns to promote and insure complete dissolution of the PES in the matrix.

The matrix may also include additional ingredients, such as performance enhancing or modifying agents and additional thermoplastic polymers provided they do not adversely affect the tack and outlife of the prepreg or the strength and damage tolerance of the cured composite part. The performance enhancing or modifying agents, for example, may be selected from flexibilizers, non-particulate toughening agents, accelerators, core shell rubbers, flame retardants, wetting agents, pigments/dyes, UV absorbers, anti-fungal compounds, fillers, conducting particles, and viscosity modifiers.

Suitable accelerators are any of the urone compounds that have been commonly used. Specific examples of accelerators, which may be used alone or in combination, include N,N-dimethyl, N'-3,4-dichlorphenyl urea (Diuron), N'-3-chlorophenyl urea (Monuron), and preferably N,N-(4-methyl-m-phenylene bis[N',N'-dimethylurea](e.g. Dyhard UR500 available from Degussa).

Suitable fillers include, by way of example, any of the following either alone or in combination: silicas, aluminas, titania, glass, calcium carbonate and calcium oxide.

Suitable conducting particles, by way of example, include any of the following either alone or in combination: silver, gold, copper, aluminuma, nickel, conducting grades of carbon, buckminsterfullerene, carbon nanotubes and carbon nanofibres. Metal-coated fillers may also be used, for example nickel coated carbon particles and silver coated copper particles.

The matrix may include small amounts (less than 5 wt %) of an additional non-epoxy thermosetting polymeric resin. Once cured, a thermoset resin is not suitable for melting and remolding. Suitable non-epoxy thermoset resin materials for the present invention include, but are not limited to, resins of phenol formaldehyde, urea-formaldehyde, 1,3,5-triazine-2,4,6-triamine (Melamine), bismaleimide, vinyl ester resins, benzoxazine resins, phenolic resins, polyesters, cyanate ester resins, epoxide polymers, or any combination thereof. The thermoset resin is preferably selected from epoxide resins, cyanate ester resins, benzoxazine and phenolic resins. If desired, the matrix may include further suitable resins containing phenolic groups, such as resorcinol based resins, and resins formed by cationic polymerization, such as DCPD-phenol copolymers. Still additional suitable resins are melamine-formaldehyde resins, and urea-formaldehyde resins.

The resin matrix is made in accordance with standard prepreg matrix processing. In general, the various epoxy resins are mixed together at room temperature to form a resin mix to which the thermoplastic toughening agent is added. This mixture is then heated to about 120° C. for about 1 to 2 hours to dissolve the thermoplastic toughening agent. The mixture is then cooled down to about 80° C. and the remainder of the ingredients (thermoplastic particle component, curing agent and other additive, if any) is mixed into the resin to form the final matrix resin that is impregnated into the fiber reinforcement.

The matrix resin is applied to the fibrous reinforcement in accordance with any of the known prepreg manufacturing techniques. The fibrous reinforcement may be fully or partially impregnated with the matrix resin. In an alternate embodiment, the matrix resin may be applied to the fiber fibrous reinforcement as a separate layer, which is proximal to, and in contact with, the fibrous reinforcement, but does not substantially impregnate the fibrous reinforcement. The prepreg is typically covered on both sides with a protective film and rolled up for storage and shipment at temperatures that are typically kept well below room temperature to avoid premature curing. Any of the other prepreg manufacturing processes and storage/shipping systems may be used if desired.

The fibrous reinforcement of the prepreg may be selected from hybrid or mixed fiber systems that comprise synthetic or natural fibers, or a combination thereof. The fibrous reinforcement may preferably be selected from any suitable material such as fiberglass, carbon or aramid (aromatic polyamide) fibers. The fibrous reinforcement is preferably carbon fibers. Preferred carbon fibers are in the form of tows that contain from 3,000 to 15,000 carbon filaments (3K to 15K). Commercially available carbon fiber tows that contain 6,000 or 12,000 carbon filaments (6K or 12K) are preferred. The resin formulations of the present invention are particularly effective in providing laminates with high G1c values (higher than 3.0) when the carbon tow contains from 10,000 to 14,000 filaments, the tensile strength is from 750 to 860 ksi, the tensile modulus is from 35 to 45 Msi, the strain at failure is 1.5 to 2.5%, the density is 1.6 to 2.0 g/cm³ and the weight per length is from 0.2 to 0.6 g/m. 6K and 12K IM7 carbon tows (available from Hexcel Corporation) are preferred. IM7 12K fibers have a tensile strength of 820 ksi, the tensile modulus is 40 Msi, the strain at failure is 1.9%, the density is 1.78 g/cm³ and the weight per length is 0.45 g/m. IM7 6K fibers have a tensile strength of 800 ksi, the tensile modulus is 40 Msi, the strain at failure is 1.9%, the density is 1.78 g/cm³ and the weight per length is 0.22 g/m.

The fibrous reinforcement may comprise cracked (i.e. stretch-broken) or selectively discontinuous fibers, or continuous fibers. It is envisaged that use of cracked or selectively discontinuous fibers may facilitate lay-up of the composite material prior to being fully cured, and improve its capability of being shaped. The fibrous reinforcement may be in a woven, non-crimped, non-woven, unidirectional, or multi-axial textile structure form, such as quasi-isotropic chopped prepreg. The woven form may be selected from a plain, satin, or twill weave style. The non-crimped and multi-axial forms may have a number of plies and fiber orientations. Such styles and forms are well known in the composite reinforcement field, and are commercially available from a number of companies, including Hexcel Reinforcements (Villeurbanne, France).

The prepreg may be in the form of continuous tapes, towpregs, webs, or chopped lengths (chopping and slitting operations may be carried out at any point after impregnation). The prepreg may be an adhesive or surfacing film and may additionally have embedded carriers in various forms both woven, knitted, and non-woven. The prepreg may be fully or only partially impregnated, for example, to facilitate air removal during curing.

The prepreg may be molded using any of the standard techniques used to form composite parts. Typically, one or more layers of prepreg are place in a suitable mold and cured to form the final composite part. The prepreg of the invention may be fully or partially cured using any suitable temperature, pressure, and time conditions known in the art. Typically, the prepreg will be cured in an autoclave at temperatures of between 160° C. and 190° C. The composite material may be cured using a method selected from microwave radiation, electron beam, gamma radiation, or other suitable thermal or non-thermal radiation.

The prepregs of the invention may be characterized by its resin content and/or its fibre volume and resin volume and/or its degree of impregnation as measured by the water up take test.

Resin and fibre content of uncured prepregs or composites are determined in accordance with ISO 11667 (method A) for moulding materials or structures which contain fibrous material which does not comprise unidirectional carbon. Resin and fibre content of uncured prepregs or composite which contain unidirectional carbon fibrous material are determined in accordance with DIN EN 2559 A (code A). Resin and fibre content of cured composites which contain carbon fibrous material are determined in accordance with DIN EN 2564 A.

The fibre and resin volume % of a prepreg or composite can be determined from the weight % of fibre and resin by dividing the weight % by the respective density of the resin and carbon fibre.

The % of impregnation of a tow or fibrous material which is impregnated with resin is measured by means of a water pick up test.

The water pick up test is conducted as follows. Six strips of prepreg are cut to a size of 100 (+/-2) mm×100 (+/-2) nm. Any backing sheet material is removed. The samples are weighed near the nearest 0.001 g (W1). The strips are located between PTFE backed aluminium plates so that 15 mm of the prepreg strip protrudes from the assembly of PTFE backed plates on one end and whereby the fibre orientation of the prepreg is extends along the protruding part. A clamp is placed on the opposite end, and 5 mm of the protruding part is immersed in water having a temperature of 23° C., relative air humidity of 50%+/-35%, and at an ambient temperature of 23° C. After 5 minutes of immersion the sample is removed from the water and any exterior water is removed with blotting paper. The sample is then weighed again W2. The percentage of water uptake WPU (%) is then calculated by averaging the measured weights for the six samples as follows: WPU (%)=[(<W2>-<W1>)/<W1>)×100. The WPU (%) is indicative of the Degree of Resin Impregnation (DRI).

Typically, the values for the resin content by weight for the uncured prepreg of the invention are in the ranges of from 15 to 70% by weight of the prepreg, from 18 to 68% by weight of the prepreg, from 20 to 65% by weight of the prepreg, from 25 to 60% by weight of the prepreg, from 25 to 55% by weight of the prepreg, from 25 to 50% by weight of the prepreg, from 25 to 45% by weight of the prepreg, from 25 to 40% by weight of the prepreg, from 25 to 35% by weight of the prepreg, from 25 to 30% by weight of the prepreg, from 30 to 55% by weight of the prepreg, from 32 to 35% by weight of the prepreg, from 35 to 50% by weight of the prepreg and/or combinations of the aforesaid ranges.

Typically, the values for the resin content by volume for the uncured prepreg of the invention are in the ranges of from 15 to 70% by volume of the prepreg, from 18 to 68% by volume of the prepreg, from 20 to 65% by volume of the prepreg, from 25 to 60% by volume of the prepreg, from 25 to 55% by volume of the prepreg, from 25 to 50% by volume of the prepreg, from 25 to 45% by volume of the prepreg, from 25 to 40% by volume of the prepreg, from 25 to 35% by volume of the prepreg, from 25 to 30% by volume of the prepreg, from 30 to 55% by volume of the prepreg, from 35 to 50% by volume of the prepreg and/or combinations of the aforesaid ranges.

Water pick up values for the uncured prepreg moulding material and tows of the invention may be in the range of from 1 to 90%, 5 to 85%, 10 to 80%, 15 to 75%, 15 to 70%, 15 to 60%, 15 to 50%, 15 to 40%, 15 to 35%, 15 to 30%, 20 to 30%, 25 to 30% and/or combinations of the aforesaid ranges. In a further embodiment the invention provides a process wherein a layer of unidirectional fibrous tows which are fully impregnated with liquid resin are superimposed on a layer of dry unimpregnated unidirectional fibrous tows and the structure consolidated so that the resin penetrates the spaces between the unimpregnated tows but leaves the spaces between the filaments within the tows at least partially unimpregnated. A supporting web or scrim may be provided on one or both sides of the structure preferably before consolidation.

In a preferred embodiment the interior of the tows is at least partially resin free to provide an air venting path or structure, so that air that may be present in the tows from the outset or that may be introduced during impregnation with the liquid resin is not trapped within the structure by the resin and can escape during preparation and consolidation of the prepreg. The air is able to escape along the length of the tows and also from the second side of the fibrous layer if the impregnation by the resin is such that some or all of the surface of the second side of the fibrous layer is not carrying resin. Furthermore, the provision of the spaces between the filaments of the tows will allow air trapped between the prepregs during stack formation to escape particularly if, in addition, one side of the prepreg is not entirely coated with resin.

The prepregs of this invention may be produced from normally available epoxy resins which may contain a hardener or curing agent and optionally an accelerator. In a preferred embodiment the epoxy resin is free of a traditional hardener such as dicyandiamide and in particular we have found that desirable prepregs can be obtained by use of hardener such as anhydrides, particularly polycarboxylic anhydrides; amines, particularly aromatic amines e.g. 1,3-diaminobenzene, 4,4'-diaminodiphenylmethane, and particularly the sulphones and methylene bisanilines, e.g. 4,4'-diaminodiphenyl sulphone (4,4' DDS), and 3,3'-diaminodiphenyl sulphone (3,3' DDS), 4,4'-methylenebis(2-methyl-6-isopropylaniline) (M-MIPA), 4,4'-methylenebis(3-chloro-2,6-diethylene aniline) (M-CDEA), 4,4'-methylenebis (2,6 diethyleneaniline) (M-DEA) and the phenol-formaldehyde resins, and/or combinations of the aforesaid curing agents. Preferred curing agents are the methylene bisanilines and the amino sulphones, particularly 4,4' DDS and 3,3' DDS. The relative amount of the curing agent and the epoxy resin that should be used will depend upon the reactivity of the resin, the desired shelf life, desired processing properties and the nature and quantity of the fibrous reinforcement in the prepreg.

In order to produce composites with substantially uniform mechanical properties it is important that the structural fibres and the epoxy resin be mixed to provide a substantially homogenous prepreg. The preferred prepregs of this invention contain a low level of voids between the tows. It is therefore preferred that each prepreg and the prepreg stack has a water pick-up value of less than 6% or less than 2%, more preferably less than 10%, most preferably less than 0.5%. The water pick-up test determines the degree of waterproofing or impregnation between the unidirectional tows of the prepregs of this invention. In this test, a specimen of prepreg material is initially weighed and clamped between two plates in such a way that a strip 5 mm wide protrudes. This arrangement is suspended in the direction of the fibres in a water bath at room temperature (21° C.) for 5 minutes. The specimen is then removed from the plates and weighed again and the difference in weight provides a value for the degree of impregnation within the specimen. The smaller the amount of water picked up, the higher the degree of waterproofing or impregnation.

Composite parts made from the improved prepreg of the present invention will find application in making articles such as numerous primary and secondary aerospace structures (wings, fuselages, bulkheads and the like), but will also be useful in many other high performance composite applications including automotive, rail and marine applications where high compressive strength, interlaminar fracture toughness and resistance to impact damage are needed.

In order that the present invention may be more readily understood, reference will now be made to the following background information and examples of the invention.

### Supporting example 1

A resin formulation was prepared as set forth in TABLE 1. A matrix resin was prepared by mixing the epoxy ingredients at room temperature with the polyethersulfone to form a resin blend that was heated to 120° C. for 60 minutes to completely dissolve the polyethersulfone. The mixture was cooled to 80° C. and the rest of the ingredients added and mixed in thoroughly.

**TABLE 1**

| Ingredient | Amount (Wt. %) |
|---|---|
| Bispbenol-F diglycidyl ether (GY285) | 17.01 |
| Trifunctional meta-glycidyl amine (MY0600) | 25.72 |
| N,N,N',N'-Tetraglycidyl-4,4'-methylenebisbenzenamine (MY721) | 10.29 |
| Thermoplastic Toughening Agent (polyether sulfone - 5003P) | 15.43 |
| PA12 Particles (SP10L) | 6.25 |
| PA11 Particles (Rislan 11) | 4.75 |
| Aromatic diamine curing agent (3,3-DDS) | 20.55 |

Prepreg was prepared by impregnating one or more layers of unidirectional carbon fibers with the resin formulation of TABLE 1. The unidirectional carbon fibers (12K IM7 available from Hexcel Corporation) were used to make a prepreg in which the matrix resin amounted to 35 weight percent of the total uncured prepreg weight and the fiber areal weight was 145 grams per square meter (gsm). A variety of prepreg lay ups were prepared using standard prepreg fabrication procedures. The prepregs were cured in an autoclave at 177° C. for about 2 hours. The cured prepregs were then subjected to standard tests to determine their tolerance to damage (CAI) and interlaminar fracture toughness (G1c and G2c).

Compression after Impact (CAI) was determined using a 3.051 Nm (270 in-lb) impact against a 32-ply quasi-isotropic laminate. The laminate was cured at 177° C. for 2 hours in the autoclave. The final laminate thickness was about 4.5 mm. The consolidation was verified by c-scan. The specimens were machined, impacted and tested in accordance with Boeing test method BSS7260 per BMS 8-276. Values are normalized to a nominal cured laminate thickness of 4.572mm (0.18 inches).

G1c and G2c are standard tests that provide a measure of the interlaninar fracture toughness of the cured laminate. G1c and G2c were determined as follows. A 26-ply unidirectional laminate was cured with a 76.2mm (3 inch) fluoroethylene polymer (FEP) film inserted along one edge, at the mid-plane of the layup, perpendicular to the fiber direction to act as a crack starter. The laminate was cured for 2 hours at 177° C. in an autoclave and gave a nominal thickness of 3.8 mm. Consolidation was verified by C-scan. Both G1c and G2c samples were machined from the same cured laminate. G1c was tested in accordance with Boeing test method BSS7233 and G2c was tested in accordance with BSS7320. Values for G1c and G2c were not normalized.

The 0° Compressive strength at room temperature under dry conditions was determined according to BS7260. The 0° Compressive strength at 82.2°C (180° F). under wet conditions was also determined according to BSS7260.

The CAI of the cured prepregs was 54.7 with G1c and G2c being 3.6 and 10.4, respectively. The CAI and G2c are both well above acceptable limits for structural parts. However, the G1c of 3.6 was exceptionally high and unexpected. G1c values of 3.0 and greater are considered to be very high values for interlaminar fracture toughness and they are desired values in the context of this application together with other mechanical properties including tensile strength. The 0° Compressive strength at room temperature under dry conditions was 293 and the 0° Compressive strength at 82.2°C (180° F) under wet conditions was 188.

### Supporting example 2 and Example 1

Prepregs were prepared and cured in the same manner as supporting example 1. The matrix formulation contained PA11 polyamide particles commercially obtained from Arkema (France) in the form of Rislan 11 and PA12 obtained from KOBO under the name SP10L. PSG is SG25/99.95. Prepregs were prepared using the same IM7 carbon fiber as supporting example 1. The prepreg contained 35% resin by weight and had a fiber areal weight of 145 gsm. The formulations used for the prepregs P1 (supporting example 2) and P2 (Example 1) re is set forth in respective TABLES 7 and 8.

**TABLE 7 - formulation for prepreg 1 (P1) - Supporting example 2**

| Ingredient | Amount (wt %) |
|---|---|
| Bisphenol-F diglycidyl ether | 5.9 |
| bisphenol A epichlorohydrin epoxy resin | 18.7 |
| N,N,N',N'-Tetraglycidyl-4,4'-methylenebisbenzenamine (MY721) | 31.2 |
| PES (5003P) | 9.0 |
| 4,4-DDS | 23.2 |
| Polyamide 11 Particles | 6 |
| Polyamide 12 Particles | 6 |

**TABLE 8 - formulation for prepreg 2 (P2) - Example 1**

| | |
|---|---|
| | |

| Ingredient | Amount (wt %) |
|---|---|
| Bisphenol-F diglycidyl ether | 5.7 |
| bisphenol A epichlorohydrin epoxy resin | 17.9 |
| N,N,N',N'-Tetraglycidyl-4,4'-methylenebisbenzenamine (MY721) | 30 |
| PES (5003P) | 9.0 |
| 4,4-DDS | 22.4 |
| PSG | 3 |
| Polyamide 11 Particles | 6 |
| Polyamide 12 Particles | 6 |

The cured prepregs were tested in the same manner as supporting example 1. The G1c for P1 (Supporting example 2) and P2 (Example 1) were 2.9 and 3.2 respectively. The tensile 0° strength at room temperature under dry conditions (normalized) was 379 Ksi and 393 Ksi respectively (increase in tensile strength for the prepreg containing PSG) whilst the modulus remained the same.

There is thus disclosed a prepreg, and a resin matrix which has improved G1c performance in combination with enhanced tensile strength.

## Claims

1. A prepreg comprising:
a fiber reinforcement; and
a curable resin comprising:
25 to 35 weight percent tetrafunctional epoxy resin based on the total weight of the curable resin;
18 to 28 weight percent difunctional epoxy resin based on the total weight of the curable resin;
4 to 18 weight percent polyether sulfone based on the total weight of the curable resin;
2 to 10 weight percent polyamide 12 particles based on the total weight of the curable resin;
2 to 10 weight percent polyamide 11 particles based on the total weight of the curable resin:
1 to 8 weight percent potato shaped graphite particles based on the total weight of the curable resin; and
17.4 to 27.4 weight percent of a curing agent for said curable resin based on the total weight of the curable resin.

2. A prepreg according to claim 1 wherein said difunctional epoxy resin is a mixture of bisphenol A epoxy resin and bisphenol F epoxy resin; preferably wherein said curable resin comprises: 16 to 20 weight percent bisphenol A epoxy resin based on the total weight of the curable resin; and 3.6 to 7.6 weight percent bisphenol F epoxy resin based on the total weight of the curable resin.

3. A prepreg according to claim 1 wherein the amount of polyamide 12 particles is equal to the amount of polyamide 11 particles; preferably wherein the amount of said polyamide 12 particles is 6 weight percent based on the total weight of the curable resin.

4. A prepreg according to claim 1 wherein said fiber reinforcement comprises fibers selected from the group consisting of carbon fibers, glass fibers and aramid fibers.

5. A composite material comprising a prepreg according to claim 1 wherein said curable resin has been cured to provide a cured prepreg.

6. A composite material according to claim 5 wherein said cured prepreg is an aircraft component; preferably wherein said aircraft component is a fuselage.

7. A method for making a prepreg comprising the steps of:
providing a fiber reinforcement; and
applying a curable resin to said fiber reinforcement, said curable resin comprising: 25 to 35 weight percent tetrafunctional epoxy resin based on the total weight of the curable resin;
18 to 28 weight percent difunctional epoxy resin based on the total weight of the curable resin;
4 to 18 weight percent polyether sulfone based on the total weight of the curable resin;
2 to 10 weight percent polyamide 12 particles based on the total weight of the curable resin;
2 to 10 weight percent polyamide 11 particles based on the total weight of the curable resin;
1 to 8 weight percent potato shaped graphite particles based on the total weight of the curable resin; and
17.4 to 27.4 weight percent of a curing agent for said curable resin based on the total weight of the curable resin.

8. A method for making a prepreg to claim 7 wherein said difunctional epoxy resin is a mixture of bisphenol A epoxy resin and bisphenol F epoxy resin; preferably wherein said curable resin comprises:
16 to 20 weight percent bisphenol A epoxy resin based on the total weight of the curable resin; and 3.6 to 7.6 weight percent bisphenol F epoxy resin based on the total weight of the curable resin.

9. A method for making a prepreg according to claim 7 wherein the amount of polyamide 12 particles is equal to the amount of polyamide 11 particles.

10. A method for making a prepreg according to claim 9 wherein the amount of said polyamide 12 particles is 6 weight percent based on the total weight of the curable resin.

11. A method for making a prepreg according to claim 7 wherein said fiber reinforcement comprises fibers selected from the group consisting of carbon fibers, glass fibers and aramid fibers.

12. A method comprising the steps of making a prepreg according to claim 7 followed by curing said curable resin to form a composite material.

13. A method for making a composite material comprising the steps of providing a prepreg according to claim 1 and curing said curable resin.

14. A method for making a composite material according to claim 13 wherein said composite material is an aircraft component; preferably wherein said aircraft component is a fuselage.

15. A resin matrix comprising 25 to 35 weight percent tetrafunctional epoxy resin based on the total weight of the curable resin;
18 to 28 weight percent difunctional epoxy resin based on the total weight of the curable resin;
4 to 18 weight percent polyether sulfone based on the total weight of the curable resin;
2 to 10 weight percent polyamide 12 particles based on the total weight of the curable resin;
2 to 10 weight percent polyamide 11 particles based on the total weight of the curable resin:
1 to 8 weight percent potato shaped graphite particles based on the total weight of the curable resin; and
17.4 to 27.4 weight percent of a curing agent for said curable resin based on the total weight of the curable resin.

## Patentansprüche

1. Prepreg, umfassend:
eine Faserverstärkung und
ein härtbares Harz, umfassend:
25 bis 35 Gewichtsprozent tetrafunktionelles Epoxidharz, bezogen auf das Gesamtgewicht des härtbaren Harzes;
18 bis 28 Gewichtsprozent difunktionelles Epoxidharz, bezogen auf das Gesamtgewicht des härtbaren Harzes;
4 bis 18 Gewichtsprozent Polyethersulfon, bezogen auf das Gesamtgewicht des härtbaren Harzes;
2 bis 10 Gewichtsprozent Polyamid-12-Teilchen, bezogen auf das Gesamtgewicht des härtbaren Harzes;
2 bis 10 Gewichtsprozent Polyamid-11-Teilchen, bezogen auf das Gesamtgewicht des härtbaren Harzes;
1 bis 8 Gewichtsprozent kartoffelförmige Graphitteilchen, bezogen auf das Gesamtgewicht des härtbaren Harzes; und
17,4 bis 27,4 Gewichtsprozent eines Härtungsmittels für das härtbare Harz, bezogen auf das Gesamtgewicht des härtbaren Harzes.

2. Prepreg nach Anspruch 1, wobei es sich bei dem difunktionellen Epoxidharz um eine Mischung von Bisphenol-A-Epoxidharz und bisphenol-F-Epoxidharz handelt, vorzugsweise wobei das härtbare Harz 16 bis 20 Gewichtsprozent Bisphenol-A-Epoxidharz, bezogen auf das Gesamtgewicht des härtbaren Harzes; und
3,6 bis 7,6 Gewichtsprozent Bisphenol-F-Epoxidharz, bezogen auf das Gesamtgewicht des härtbaren Harzes; umfasst.

3. Prepreg nach Anspruch 1, wobei die Menge von Polyamid-12-Teilchen gleich der Menge von Polyamid-11-Teilchen ist; vorzugsweise wobei die Menge der Polyamid-12-Teilchen 6 Gewichtsprozent, bezogen auf das Gesamtgewicht des härtbaren Harzes, beträgt.

4. Prepreg nach Anspruch 1, wobei die Faserverstärkung Fasern aus der Gruppe bestehend aus Kohlefasern, Glasfasern und Aramidfasern umfasst.

5. Verbundwerkstoff, umfassend ein Prepreg nach Anspruch 1, wobei das härtbare Harz zur Bereitstellung eines gehärteten Prepreg gehärtet worden ist.

6. Verbundwerkstoff nach Anspruch 5, wobei es sich bei dem gehärteten Prepreg um ein Luftfahrzeugbauteil handelt; vorzugsweise wobei es sich bei dem Luftfahrzeugbauteil um einen Flugzeugrumpf handelt.

7. Verfahren zur Herstellung eines Prepreg, das folgende Schritte umfasst:
Bereitstellen einer Faserverstärkung und Aufbringen eines härtbaren Harzes auf die Faserverstärkung, wobei das härtbare Harz 25 bis 35 Gewichtsprozent tetrafunktionelles Epoxidharz, bezogen auf das Gesamtgewicht des härtbaren Harzes;
18 bis 28 Gewichtsprozent difunktionelles Epoxidharz, bezogen auf das Gesamtgewicht des härtbaren Harzes;
4 bis 18 Gewichtsprozent Polyethersulfon, bezogen auf das Gesamtgewicht des härtbaren Harzes;
2 bis 10 Gewichtsprozent Polyamid-12-Teilchen, bezogen auf das Gesamtgewicht des härtbaren Harzes;
2 bis 10 Gewichtsprozent Polyamid-11-Teilchen, bezogen auf das Gesamtgewicht des härtbaren Harzes;
1 bis 8 Gewichtsprozent kartoffelförmige Graphitteilchen, bezogen auf das Gesamtgewicht des härtbaren Harzes; und
17,4 bis 27,4 Gewichtsprozent eines Härtungsmittels für das härtbare Harz, bezogen auf das Gesamtgewicht des härtbaren Harzes;
umfasst.

8. Verfahren zur Herstellung eines Prepreg nach Anspruch 7, wobei es sich bei dem difunktionellen Epoxidharz um eine Mischung von Bisphenol-A-Epoxidharz und bisphenol-F-Epoxidharz handelt, vorzugsweise wobei das härtbare Harz 16 bis 20 Gewichtsprozent Bisphenol-A-Epoxidharz, bezogen auf das Gesamtgewicht des härtbaren Harzes; und
3,6 bis 7,6 Gewichtsprozent Bisphenol-F-Epoxidharz, bezogen auf das Gesamtgewicht des härtbaren Harzes; umfasst.

9. Verfahren zur Herstellung eines Prepreg nach Anspruch 7, wobei die Menge von Polyamid-12-Teilchen gleich der Menge von Polyamid-11-Teilchen ist.

10. Verfahren zur Herstellung eines Prepreg nach Anspruch 9, wobei die Menge der Polyamid-12-Teilchen 6 Gewichtsprozent, bezogen auf das Gesamtgewicht des härtbaren Harzes, beträgt.

11. Verfahren zur Herstellung eines Prepreg nach Anspruch 7, wobei die Faserverstärkung Fasern aus der Gruppe bestehend aus Kohlefasern, Glasfasern und Aramidfasern umfasst.

12. Verfahren, umfassend die Schritte der Herstellung eines Prepreg nach Anspruch 7 und der anschließenden Härtung des härtbaren Harzes zur Bildung eines Verbundwerkstoffs.

13. Verfahren zur Herstellung eines Verbundwerkstoffs, umfassend die Schritte der Bereitstellung eines Prepreg nach Anspruch 1 und der Härtung des härtbaren Harzes.

14. Verfahren zur Herstellung eines Verbundwerkstoffs nach Anspruch 13, wobei es sich bei dem Verbundwerkstoff um ein Luftfahrzeugbauteil handelt; vorzugsweise wobei es sich bei dem Luftfahrzeugbauteil um einen Flugzeugrumpf handelt.

15. Harzmatrix, umfassend 25 bis 35 Gewichtsprozent tetrafunktionelles Epoxidharz, bezogen auf das Gesamtgewicht des härtbaren Harzes;
18 bis 28 Gewichtsprozent difunktionelles Epoxidharz, bezogen auf das Gesamtgewicht des härtbaren Harzes;
4 bis 18 Gewichtsprozent Polyethersulfon, bezogen auf das Gesamtgewicht des härtbaren Harzes;
2 bis 10 Gewichtsprozent Polyamid-12-Teilchen, bezogen auf das Gesamtgewicht des härtbaren Harzes;
2 bis 10 Gewichtsprozent Polyamid-11-Teilchen, bezogen auf das Gesamtgewicht des härtbaren Harzes;
1 bis 8 Gewichtsprozent kartoffelförmige Graphitteilchen, bezogen auf das Gesamtgewicht des härtbaren Harzes; und
17,4 bis 27,4 Gewichtsprozent eines Härtungsmittels für das härtbare Harz, bezogen auf das Gesamtgewicht des härtbaren Harzes.

## Revendications

1. Matériau préimprégné comprenant :
un renforcement fibreux ; et
une résine durcissable comprenant :
25 à 35 % en poids de résine époxyde tétrafonctionnelle relativement au poids total de la résine durcissable ;
18 à 28 % en poids de résine époxyde difonctionnelle relativement au poids total de la résine durcissable ;
4 à 18 % en poids de polyéthersulfone relativement au poids total de la résine durcissable ;
2 à 10 % en poids de particules de polyamide 12 relativement au poids total de la résine durcissable ;
2 à 10 % en poids de particules de polyamide 11 relativement au poids total de la résine durcissable ;
1 à 8 % en poids de particules de graphite en forme de pomme de terre relativement au poids total de la résine durcissable ; et
17,4 à 27,4 % en poids d'un durcisseur pour ladite résine durcissable relativement au poids total de la résine durcissable.

2. Matériau préimprégné selon la revendication 1, dans lequel ladite résine époxyde difonctionnelle est un mélange de résine époxyde de bisphénol A et de résine époxyde de bisphénol F ; préférablement dans lequel ladite résine durcissable comprend :
16 à 20 % en poids de résine époxyde de bisphénol A relativement au poids total de la résine durcissable ; et
3,6 à 7,6 % en poids de résine époxyde de bisphénol F relativement au poids total de la résine durcissable.

3. Matériau préimprégné selon la revendication 1, dans lequel la quantité de particules de polyamide 12 est égale à la quantité de particules de polyamide 11 ; préférablement dans lequel la quantité desdites particules de polyamide 12 est de 6 % en poids relativement au poids total de la résine durcissable.

4. Matériau préimprégné selon la revendication 1, dans lequel ledit renforcement fibreux comprend des fibres sélectionnées dans le groupe constitué de fibres de carbone, de fibres de verre et de fibres d'aramide.

5. Matériau composite comprenant un matériau préimprégné selon la revendication 1, dans lequel ladite résine durcissable a été durcie pour produire un matériau préimprégné durci.

6. Matériau composite selon la revendication 5, dans lequel ledit matériau préimprégné durci est un composant d'aéronef ; préférablement dans lequel ledit composant d'aéronef est un fuselage.

7. Procédé de fabrication d'un matériau préimprégné, comprenant les étapes qui consistent à :
fournir un renforcement fibreux ; et
appliquer une résine durcissable sur ledit renforcement fibreux, ladite résine durcissable comprenant :
25 à 35 % en poids de résine époxyde tétrafonctionnelle relativement au poids total de la résine durcissable ;
18 à 28 % en poids de résine époxyde difonctionnelle relativement au poids total de la résine durcissable ;
4 à 18 % en poids de polyéthersulfone relativement au poids total de la résine durcissable ;
2 à 10 % en poids de particules de polyamide 12 relativement au poids total de la résine durcissable ;
2 à 10 % en poids de particules de polyamide 11 relativement au poids total de la résine durcissable ;
1 à 8 % en poids de particules de graphite en forme de pomme de terre relativement au poids total de la résine durcissable ; et
17,4 à 27,4 % en poids d'un durcisseur pour ladite résine durcissable relativement au poids total de la résine durcissable.

8. Procédé de fabrication d'un matériau préimprégné selon la revendication 7, dans lequel ladite résine époxyde difonctionnelle est un mélange de résine époxyde de bisphénol A et de résine époxyde de bisphénol F ; préférablement dans lequel ladite résine durcissable comprend :
16 à 20 % en poids de résine époxyde de bisphénol A relativement au poids total de la résine durcissable ; et
3,6 à 7,6 % en poids de résine époxyde de bisphénol F relativement au poids total de la résine durcissable.

9. Procédé de fabrication d'un matériau préimprégné selon la revendication 7, dans lequel la quantité de particules de polyamide 12 est égale à la quantité de particules de polyamide 11.

10. Procédé de fabrication d'un matériau préimprégné selon la revendication 9, dans lequel la quantité desdites particules de polyamide 12 est de 6 % en poids relativement au poids total de la résine durcissable.

11. Procédé de fabrication d'un matériau préimprégné selon la revendication 7, dans lequel ledit renforcement fibreux comprend des fibres sélectionnées dans le groupe constitué de fibres de carbone, de fibres de verre et de fibres d'aramide.

12. Procédé comprenant les étapes de fabrication d'un matériau préimprégné selon la revendication 7, suivies d'un durcissement de ladite résine durcissable pour former un matériau composite.

13. Procédé de fabrication d'un matériau composite, comprenant les étapes qui consistent à produire un matériau préimprégné selon la revendication 1 et à durcir ladite résine durcissable.

14. Procédé de fabrication d'un matériau composite selon la revendication 13, dans lequel ledit matériau composite est un composant d'aéronef ; préférablement dans lequel ledit composant d'aéronef est un fuselage.

15. Matrice de résine comprenant :
25 à 35 % en poids de résine époxyde tétrafonctionnelle relativement au poids total de la résine durcissable ;
18 à 28 % en poids de résine époxyde difonctionnelle relativement au poids total de la résine durcissable ;
4 à 18 % en poids de polyéthersulfone relativement au poids total de la résine durcissable ;
2 à 10 % en poids de particules de polyamide 12 relativement au poids total de la résine durcissable ;
2 à 10 % en poids de particules de polyamide 11 relativement au poids total de la résine durcissable :
1 à 8 % en poids de particules de graphite en forme de pomme de terre relativement au poids total de la résine durcissable ; et
17,4 à 27,4 % en poids d'un durcisseur pour ladite résine durcissable relativement au poids total de la résine durcissable.
